# FASCICULE DE BREVET EUROPEEN

(11) **EP 0 343 044 B1**
(45) Date de publication et mention de la délivrance du brevet: **31.03.1993**
(21) Numéro de dépôt: 89401311.9
(22) Date de dépôt: 11.05.1989
(51) Int. Cl.: F16C 32/06

(54) **Dispositif de support de rotor par paliers à gaz**
Rotorunterstützungsvorrichtung mit Gaslagern
Rotor-supporting device using air bearings

(30) Priorité: 17.05.1988 FR 8806589
(43) Date de publication de la demande: 23.11.1989
(73) Titulaire: HISPANO-SUIZA Société anonyme dite:, F-92213 Saint Cloud (FR)
(72) Inventeur: Leturco, Michel Marie Maurice, F-92500 Rueil Malmaison (FR); Willemin, Pascal, F-78150 Le Chesnay (FR)
(74) Mandataire: Moinat, François

(56) Documents cités:
- EP-A- 0 034 246
- DE-A- 2 064 725
- FR-A- 1 053 541
- GB-A- 1 146 884

## Description

La présente invention a pour objet un dispositif de support de rotor par paliers à gaz destiné à maintenir, radialement et axialement, le rotor d'une machine tournante, notamment d'une machine tournant à grande vitesse.

Les technologies actuelles de paliers à roulements ou de paliers fluides conduisent à une limitation de la vitesse périphérique relative entre le rotor et le stator de l'ordre de 100 m/s soit un produit DN < 2 10⁶mm x 60 N,
D étant le diamètre du palier en mm
N étant la vitesse de rotation du rotor en tours par seconde.

Les technologies nouvelles de paliers magnétiques permettront de repousser les limites de la vitesse de rotation mais nécessiteront des dispositifs de régulation complexes et encombrants.

On a par ailleurs déjà proposé, notamment par le FR-A-1 053 541, des paliers à gaz dans lesquels, sur le stator, sont ménagées des cavités régulièrement réparties en regard d'une surface de portée ménagée sur le rotor, chaque cavité étant alimentée en gaz sous pression au travers d'un orifice calibré. Dans de tels dispositifs, la pression régnant dans les cavités varie en fonction même du jeu entre les surfaces portantes et les portées. Toutefois ces dispositifs présentent des risques de vibration et d'instabilité qui peuvent se situer dans la gamme de vitesse d'utilisation.

La présente invention a pour objet un dispositif de support de rotor par au moins un palier à gaz du type précédent mais ne présentant par les inconvénients ci-dessus. Conformément à l'invention, un système d'étanchéité, autorisant une fuite calibrée de gaz est ménagé, entre le stator et l'arbre du rotor de manière à délimiter, à chacune des extrémités du dispositif, un espace annulaire dans lequel règne un niveau de pression relativement élevé par rapport à la pression règnant à l'extérieur dudit dispositif équipé de son système d'étanchéité.

Avantageusement, chaque système d'étanchéité est du type connu dit à labyrinthe. Le dispositif de l'invention convient particulièrement aux dispositifs de support comportant une pluralité de paliers, dans cette hypothèse, l'ensemble des cavités ménagées dans les surfaces portantes du stator en regard des portées est alimenté en gaz sous pression par un circuit unique. Grâce à cette disposition, le système d'étanchéité peut être limité à deux garnitures, elles sont alors placées de part et d'autre de la pluralité de paliers.

En se référant aux figures schématiques ci-jointes on va décrire un exemple de mise en oeuvre de l'invention, donné à titre non limitatif.

Les figures 1 à 6 représentent des exemples de réalisation de paliers à gaz de type connus.

La figure 7 représente un aménagement d'un dispositif support par paliers à gaz conforme à l'invention.

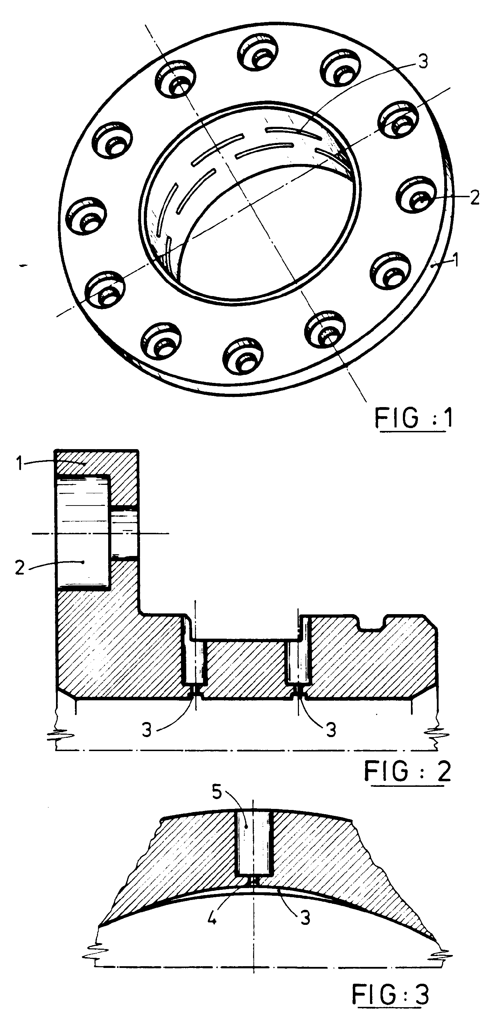

La figure 1 représente un élément de palier 10 à gaz de type connu, devant assurer le support radial d'un arbre. Cet élément 10 est destiné à être fixé au carter de la machine par une bride 1 dans laquelle sont ménagés des passages 2 pour des vis de fixation. Sur la surface interne de cet élément on voit deux rangées de cavités 3. Cet élément de palier est représenté en coupe longitudinale à la figure 2.

Sur cette figure, ainsi que sur la coupe radiale, à plus grande échelle de la figure 3, on voit les cavités 3 qui sont alimentées en gaz sous pression, au travers d'un orifice calibré 4, à partir de canalisations radiales 5.

Le comportement d'un tel palier est bien connu. En fonctionnant sans charge radiale, l'arbre de la machine tourne au centre du palier, chaque cavité restant à égale distance de l'arbre d'où l'établissement d'une pression égale dans chaque cavité.

Sous charge, l'arbre se décentre par rapport au palier, la pression dans les cavités les plus rapprochées des portées de l'arbre augmente créant ainsi un accroissement d'effort qui tend à s'opposer à la charge et à ramener l'arbre dans une position d'équilibre stable. Dans les cavités qui s'écartent de l'arbre, la pression chûte, d'où une diminution de l'effort qui tend également à ramener l'arbre dans une position d'équilibre. Cette chûte de pression est d'autant plus forte que le régime d'écoulement dans l'orifice devient sonique créant ainsi une limitation du débit de gaz.

On a représenté, dans cet exemple, un palier comportant des cavités réparties sur deux lignes parallèles situées aux deux extrémités de l'alésage. Cette disposition permet d'obtenir, en plus du maintien radial de l'arbre, une certaine raideur en flexion transversale.

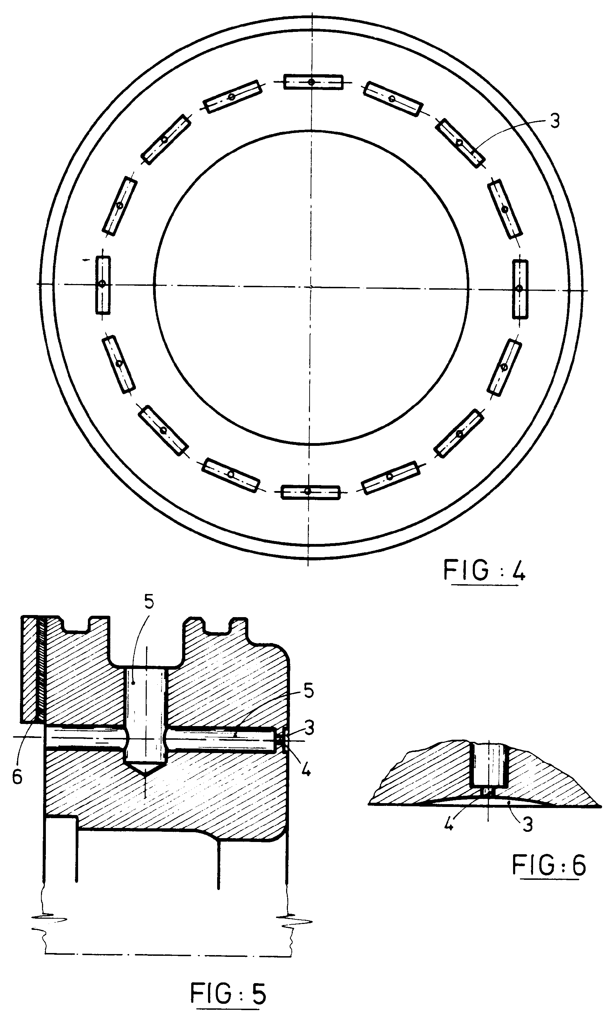

Les figures 4, 5 et 6 représentent, respectivement de la même manière que les figures 1, 2 et 3, un palier à gaz de type connu mais pour une application sous forme de butée axiale.

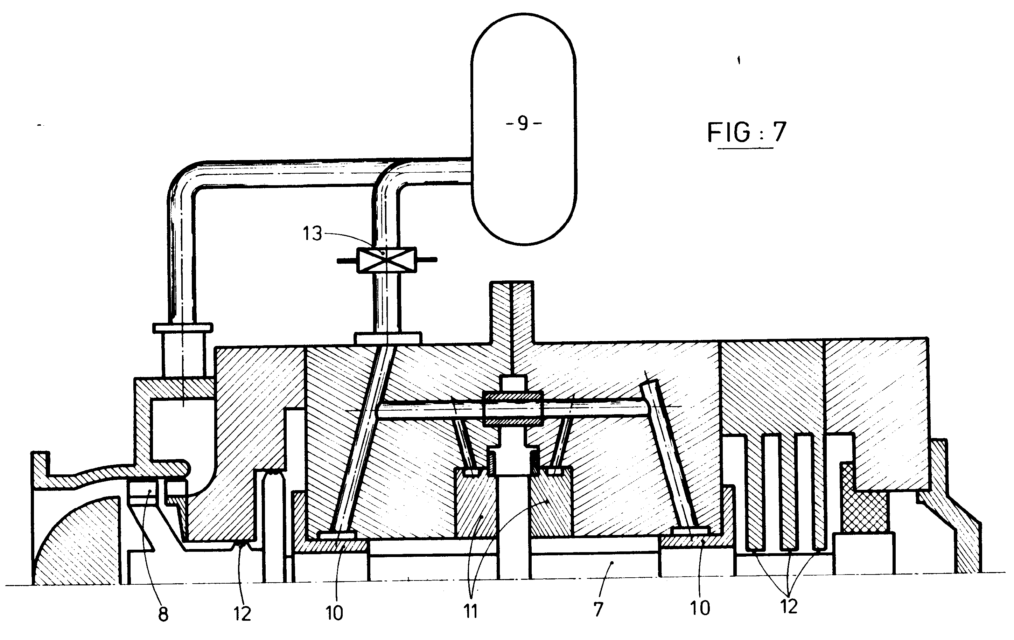

La figure 7 représente un dispositif de support de rotor par paliers à gaz conforme à l'invention, mettant en oeuvre des éléments connus tels que ceux qui viennent d'être décrits. Cet ensemble est utilisé dans le cadre d'un système cryotechnique comportant un rotor 7 mis en mouvement par une turbine à air 8, elle même alimentée par une source de pression 9.

Le dispositif représenté comporte deux paliers radiaux 10 et deux butées axiales 11, du genre ci-dessus. Conformément à l'invention, un système d'étanchéité, autorisant une fuite calibrée de gaz, est ménagé, entre le stator et l'arbre du rotor, de part et d'autre des surfaces de portées des paliers 10. Ce système d'étanchéité se compose de garnitures 12 dites à labyrinthes.

Le stator de la machine intègre le circuit d'alimentation des paliers radiaux 10 et axiaux 11 sous la forme d'un circuit unique.

Cette disposition particulière mais non limitative permet de limiter le nombre des systèmes d'étanchéité 12 entre l'intérieur du carter et les deux extrémités de l'arbre. Un robinet 13 monté à la sortie de la source d'alimentation 9 en air sous pression permet d'ajuster le débit de gaz et donc le niveau de pression d'alimentation à la valeur désirée.

Avec les systèmes d'étanchéité 12 conformes à l'invention, la pression de sortie des paliers radiaux et axiaux peut être maintenu à une valeur relativement élevée par rapport à la pression régnant à l'extérieur dudit dispositif équipé de son systeme d'etanchéité. Ce niveau de pression élevé conduit à augmenter la masse volumique du gaz d'où un fonctionnement en régime turbulent. Il en résulte la possibilité d'augmenter considérablement la raideur des paliers d'où l'écartement des régimes d'instabilité au delà de la plage de fonctionnement.

A titre d'exemple, avec une alimentation à la pression de 6 MPa il est possible d'avoir, grâce à l'invention une pression résiduelle en sortie de portées de l'ordre de 1,5 MPa.

Avec l'exemple de réalisation qui a été décrit on a atteint une vitesse périphérique de 160 m/s au niveau des portées radiales et supérieure à 220 m/s au niveau des portées axiales. Ces valeurs indicatrices ne sont en rien limitatives de l'invention.

Les paliers à gaz étaient jusqu'à présent réservés à des applications à faibles frottements (appareillage de mesure) ou sans pollution (nucléaire), l'invention doit permettre d'étendre l'utilisation des paliers à gaz dans des domaines plus vastes que ceux actuels, notamment dans ceux des moteurs d'avions, des bancs d'essais, des turbopompes pour l'industrie spatiale..etc, et ceci en raison des caractéristiques de raideur importante qu'elle apporte.

## Revendications

1. Dispositif de support de rotor (7) par au moins un palier (10,11) à gaz pour machine tournante, du genre dans lequel, sur le stator, sont ménagées des cavités (3) régulièrement réparties en regard d'une surface de portée ménagée sur le rotor (7), chaque cavité (8) étant alimentée en gaz sous pression au travers d'un orifice calibré (4),
caractérisé en ce que, un système d'étanchéité (12) autorisant une fuite calibrée en gaz, est ménagé, entre le stator et l'arbre du rotor (7), de manière à délimiter, à chacune des extrémités du dispositif,un espace annulaire dans lequel règne un niveau de pression relativement élevé, par rapport à la pression règnant à l'extérieur dudit dispositif équipé de son système d'étanchéité.

2. Dispositif de support selon la revendication 1, caractérisé en ce que chaque système d'étanchéité (12) qui autorise une fuite calibrée est un système à labyrinthe.

3. Dispositif de support selon l'une des revendications 1 ou 2, caractérisé en ce que, en cas de pluralité de paliers (10, 11) l'ensemble des cavités (3) ménagées sur le stator en regard des portées est alimenté en gaz sous pression par un circuit unique (9) et le système d'étanchéité (12) est limité à deux garnitures (12) disposées de part et d'autre de la pluralité de paliers (10, 11).

## Patentansprüche

1. Lagerungsvorrichtung für den Rotor (7) einer rotierenden Maschine mit wenigstens einem Gaslager (10, 11), bei der an dem Stator in regelmäßiger Verteilung Hohlräume (3) angebracht sind, die einer an dem Rotor (7) ausgebildeten Lagerfläche gegenüberliegen, wobei jeder Hohlraum durch eine kalibrierte Öffnung (4) mit unter Druck stehendem Gas gespeist wird,
**dadurch gekennzeichnet,**
daß zwischen dem Stator und der Welle des Rotors (7) ein Dichtungssystem (12) vorgesehen ist, das ein kalibriertes Entweichen von Gas ermöglicht und das an jedem Ende der Vorrichtung einen ringförmiger Zwischenraum abgrenzt, in dem ein im Vergleich zu dem außerhalb der mit ihrem Dichtungssystem ausgestatteten Vorrichtung herrschenden Druck relativ hoher Druckpegel herrscht.

2. Lagerungsvorrichtung nach Anspruch 1, dadurch gekennzeichnet, daß jedes Dichtungssystem (12), das ein kalibriertes Entweichen von Gas ermöglicht, als Labyrinthsystem ausgebildet ist.

3. Lagerungsvorrichtung nach einem der Ansprüche 1 oder 2, dadurch gekennzeichnet, daß für den Fall, daß mehrere Gaslager (10, 11) vorhanden sind, die Gesamtheit der an dem Stator gegenüber den Lagerflächen angebrachten Hohlräume (3) durch einen einzigen Speisekreis (9) mit unter Druck stehendem Gas gespeist wird und daß das Dichtungssystem (12) auf zwei Dichtungen (12) beschränkt ist, die zu beiden Seiten der mehreren Gaslager (10, 11) angeordnet sind.

## Claims

1. Device for supporting a rotor (7) with at least one gas bearing (10, 11) for a rotating machine of the type in which there are formed on the stator cavities (3) evenly spaced out facing a supported surface formed on the rotor (7) each cavity (8) [sic. should. be 3] being supplied with gas under pressure through a calibrated hole (4), characterised in that a sealing system (12) providing for a calibrated leakage of gas is placed between the stator and the shaft of the rotor (7), in such a way as to define at each end of the device an annular space in which there obtains a pressure relatively high in relation to the pressure outside the said device fitted with its sealing system.

2. Rotor-supporting device in accordance with Claim 1, characterised in that each sealing system (12) which provides for a calibrated leakage is a labyrinth system.

3. Rotor-supporting device in accordance with either of Claims 1 and 2, characterised in that in the event of a plurality of bearings (10), all the cavities (3) formed in the stator and facing the supported surfaces is supplied with gas under pressure by a single circuit (9) and the sealing system (12) is limited to two seals (12) placed on either side of the plurality of bearings (10, 11).
